# EUROPEAN PATENT SPECIFICATION

(11) **EP 3 774 509 B1**
(45) Date of publication and mention of the grant of the patent: **06.05.2026**
(21) Application number: 19724603.6
(22) Date of filing: 28.03.2019
(51) Int. Cl.: B62K 11/00, A61G 5/04

(54) **PERSONAL TRANSPORT DEVICE**
PERSÖNLICHE TRANSPORTVORRICHTUNG
DISPOSITIF DE TRANSPORT PERSONNEL

(30) Priority: 29.03.2018 IT 201800004102
(43) Date of publication of application: 17.02.2021
(73) Proprietor: Genny Factory SA, 6592 Sant'Antonino (CH)
(72) Inventor: PELLERO, Bruno, 17100 Savona (IT); BADANO, Paolo, 6900 Lugano (CH)
(74) Representative: Bottino, Giovanni
(86) International application number: PCT/IB2019/052559
(87) International publication number: WO 2019/186464

(56) References cited:
- EP-A1- 2 995 540
- DE-A1- 102012 007 875
- JP-A- 2011 063 238
- US-A1- 2015 251 563

## Description

The present invention relates to a personal transport device comprising a base interposed between electrically motorized wheels commanded by a steering unit and a support frame integrally constrained to said base and provided with a seat.

The invention falls within the technical scope of personal transport devices, and finds application above all, even if not only, in the context of balance-oriented personal transport devices.

These devices are locomotion means typically comprising a platform located between a pair of electrically motorized coaxial wheels and provided with load sensing means adapted to detect the presence of a driver on the platform. These sensors are arranged to allow the activation of a steering unit suitable for commanding the motorized wheels with the aid of gyroscopic and accelerometric sensors connected to an electronic feedback control microprocessor. By way of forward and backward balance variations of the driver's body, the motorized wheels are operated in order to move the vehicle forward or backward or to stop it. In some devices, the balance variations also command the turn, while in others the turn is commanded by a swinging bar with handlebars, mechanically coupled to the platform.

An example of such devices currently available on the market is called "Segway".

On the Segway, the driver is placed in an upright position, with both feet resting on the platform.

The existence of motorized self-balancing wheelchairs for people with no mobility of the lower limbs or partial mobility of the lower limbs is also known. In particular, the existence of a motorized wheelchair for transporting a person in a seated position, comprising a base operable by the user for the activation of the motorized wheelchair, two or more wheels arranged on the sides of the base, resting on a sliding surface, and a support frame integrally constrained to the base and provided with a seat, is known. As with the Segway, this type of motorized wheelchair also includes means for self-balancing the weight in any working condition. Such self-balancing or balancing means of the weight of the wheelchair are housed inside the base, also together with further means for varying the advancement direction of the wheelchair. The advancement or retraction is obtained through the front or rear unbalance of the user's body. The wheelchair also typically includes suitable safety measures to allow it to be parked and actuated safely after checking the presence of a suitable driver. The activation of the wheelchair is in fact obtained at the moment when a person sits on the wheelchair seat, and its weight is used to detect the presence of the user and activate the electric operation of the wheelchair.

This type of motorized wheelchair can be built from scratch or be the result of the application of a seat to a pre-existing transport device such as a Segway or the like, which acts in this way as a self-balancing drive.

In both cases, in the currently known personal transport devices, the activation or deactivation of the steering unit adapted to command the motorized wheels is carried out by mechanical means. However, these means are bulky, increase the overall weight of the device and require frequent maintenance. The invention is defined by the independent claims and the preferred embodiments by the dependent claims.

Document EP2995540A1 shows the preamble of independent claims 1 and 6. The object of the present invention is to overcome the aforementioned disadvantages of currently known personal transport devices, namely the need for mechanical interaction between the seat and the driver presence sensors provided in the platform. The present invention aims at solving the currently unsatisfied need for a personal transport device which does not require any type of mechanical actuation.

These objects are obtained by means of a personal transport device as described at the beginning, which comprises at least one load sensor configured to detect the pressure exerted by the driver on the seat and an electronic command and control unit adapted to command the steering unit on the basis of the signals received by the sensor, the command and control unit being connected to the sensor by means of first interface means of the electrical and/or optical and/or magnetic and/or electromagnetic and/or mechanical and/or pneumatic and/or fluid dynamic type, and the command and control unit being connected to the steering unit by means of second interface means of the electrical and/or optical and/or magnetic and/or electromagnetic type.

The second interface means put the command and control unit in communication with the drive. The communication between the two, that is from the command and control unit to the drive, can be unidirectional, or it can be bidirectional.

The first interface means between the sensor and the electronic command and control unit are mainly unidirectional, i.e. from the sensor to the command and control unit, but they can also be bidirectional.

In an exemplary embodiment, the first and/or second interface means are electrical connections and the actuation takes place by means of an electrical signal.

In a further embodiment, the first and/or second interface means are connections of the optical type and the actuation takes place by means of an optical command.

In a further embodiment, the first and/or second interface means are connections of the magnetic type and the actuation takes place by means of a magnetic command.

In a further exemplary embodiment, the first and/or second interface means are connections of the electromagnetic type and the actuation takes place by means of an electromagnetic or radio-electrical command.

In a further exemplary embodiment, the first interface means between the sensor and the command and control unit are connections of the pneumatic type and the actuation takes place by means of a pneumatic command.

In a further embodiment example, the first interface means between the sensor and the command and control unit are connections of the fluid dynamic type and the actuation takes place by means of a fluid dynamic command.

The aforementioned types can be provided independently for the connection between the sensor and the command and control unit and for the connection between the command and control unit and the drive, alternatively or at least in a partial combination between them, depending on the intended use.

In an exemplary embodiment, the transport device provides a stabilization assembly provided with supports, which can be operated from a raised position to a lowered position in which the supports touch the ground, thus stabilizing the device. The command and control unit can advantageously operate the steering unit when the driver on the seat moves the supports of the stabilization assembly from the lowered position to the raised position, or automatically deactivate in the raised position of the supports, in case the driver falls from the seat.

The device object of the present invention therefore makes it possible not to provide any type of mechanical actuation between the electronic command and control unit and the drive.

According to an exemplary embodiment, at least one said sensor is positioned within or under the seat.

According to a further embodiment, the command and control unit is configured to process the received signal from the sensor so as to detect the presence of the driver on the seat.

In this way, the sensor produces a logical or binary effect, that is, capable of signalling the presence of a driver weighing not less than an adjustable threshold.

According to a further exemplary embodiment, the command and control unit is configured to process the signal received by the sensor so as to measure the driver's weight on the seat.

In this way, the sensor produces an analogue effect, that is, it is capable of measuring the variation over time of the pressure exerted on the seat which is a function of the weight of the driver and of the vertical accelerations it undergoes.

The load sensor is a load cell or any other sensor that produces a digital or analogue output as a function of the presence of the driver on board and/or his weight.

According to an improvement, means are provided for comparing the weight value measured by the sensor with predetermined safety weight thresholds, so that the electronic command and control unit activates the steering unit only if the measured weight value is included between the limits indicated by said safety weight thresholds.

This allows the electronic unit to ascertain the presence of the driver and, in the most sophisticated models, to ascertain that the load due to the driver is included in the safety (minimum and maximum) limits of the device.

According to the invention, the command and control unit is configured to process the received signal from the sensor so as to detect also vertical accelerations of the seat. Means are provided for comparing the measured acceleration values with a predetermined and customizable safety acceleration threshold, so that, for example, the electronic command and control unit automatically reduces the speed of the motorized wheels if the measured acceleration value is above said safety acceleration threshold. Optionally, it is then possible to automatically restore the speed to the initial values, i.e. to the values prior to the automatic reduction, when the need no longer exists.

A further object of the present invention is a transformation unit applicable to a self-balancing personal transport device of the "Segway" type or the like for its driving in a seated position, which device comprises a base interposed between electrically motorized wheels and a steering unit adapted to command the motorized wheels in response to balance variations of the driver relative to the base. The transformation assembly comprises a support frame which can be integrally constrained to said base and provided with a seat and at least one load sensor configured to detect the pressure exerted by the driver on the seat and an electronic command and control unit adapted to command the steering unit on the basis of the signals received by the sensor, the command and control unit being connected to the sensor by means of first interface means of the electrical and/or optical and/or magnetic and/or electromagnetic and/or mechanical and/or pneumatic and/or fluid dynamic type, and the command and control unit being connected to the steering unit by means of second interface means of the electrical and/or optical and/or magnetic and/or electromagnetic type.

According to one or more embodiments, the transformation assembly has one or more of the features described above.

Another not claimed embodiment is a method for activating and/or deactivating a personal transport device comprising a base interposed between electrically motorized wheels, a support frame integrally constrained to said base and provided with a seat, a steering unit adapted to command the motorized wheels in response to balance variations of the driver with respect to the seat. The method includes the following steps:
a) detecting the presence of the driver on the seat;
b) allowing, by means of the electronic command and control unit, the activation of the motorized wheels.

According to an embodiment of the method, before step b), the following further steps are provided:
a1) measuring the weight of the driver on the seat;
a2) comparing the measured weight with predetermined safety thresholds;
in such a way that the activation referred to in step b) is allowed only if the measured weight value is comprised between the limits indicated by said safety thresholds.

According to a further embodiment of the method, before step b), the following further steps are provided:
a1) detecting the accelerations of the seat;
a2) comparing the acceleration values measured with a predetermined safety acceleration threshold;
in such a way that the speed of the motorized wheels is automatically reduced if the measured acceleration value is higher than said safety acceleration threshold to be then restored when the need no longer exists.

These and other features and advantages of the present invention will become clearer from the following description of some non-limiting exemplary embodiments illustrated in the attached drawings in which:
Fig. 1 shows a front view of an exemplary embodiment of the device;
Fig. 2 shows a block diagram of the method.

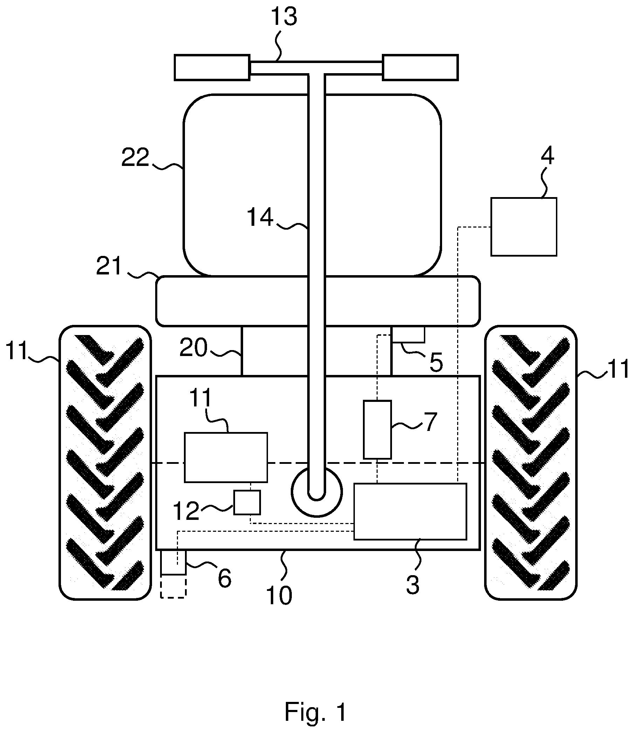

Figure 1 shows an exemplary embodiment of the personal transport system according to the present invention. According to this embodiment example, the device is self-balancing and comprising a base 10 interposed between two electrically motorized wheels 11 able to rest on a sliding surface. Alternatively, additional personal transport devices with 3 or more wheels can be provided.

The device comprises a swinging bar 14 for commanding the turn. The swinging bar 14 is mechanically coupled to the base 10 at a lower end, while at the opposite upper end it is provided with handlebars 13. The swinging bar 14 is optional, and the turn can be commanded by the driver only by means of his/her balance variations on the seat.

The device comprises a support frame 20 integrally constrained to the base 10. A seat 21 and a backrest 22 are fixed to the support frame 20 for the transport of a person in a seated position. The swinging bar 14 is of such a length and shape that the handlebars 13 can be easily held and operated by a person positioned on the seat 21.

The base 10 also includes an electronic steering unit 15 for commanding the motorized wheels 11 in response to balance variations of the driver relative to the seat 21 by means of gyroscopic and accelerometric sensors connected to an electronic feedback control microprocessor.

At least one load sensor 5 is configured to detect the pressure exerted by the driver on the seat 21 and an electronic command and control unit 3 able to provide the activation criterion to the steering unit 15, and therefore to the drive, based on the signals received by the sensor 5.

The load sensor 5 is advantageously positioned within or below the seat 21 and can be of any type currently known to the person skilled in the art.

The command and control unit 3 is connected to the steering unit 15 by means of second interface means 12 of the electric and/or optical and/or magnetic and/or electromagnetic type.

These second interface means are electrical (actuation takes place by means of an electric signal) and/or optical (actuation takes place by means of an optical command) and/or magnetic (actuation takes place by means of a magnetic command) and/or electromagnetic (actuation takes place by electromagnetic or radio-electrical command) command connections.

In a particular exemplary embodiment, the transport device provides a stabilization assembly provided with supports 6, which can be operated from a raised position to a lowered position in which the supports 6 touch the ground, thus stabilizing the device. Input means 4 are provided, for example a push-button panel placed on an armrest. By means of these input means 4 the user can, for example, lower the supports 6, switch on the lights and display the charge state of the battery.

The activation and/or deactivation of the electronic command and control unit 3 can be carried out by the driver himself in manual mode, by means of the input means 4, or it can be carried out automatically on the basis of the signal of the sensor 5, for example a load sensor. The command and control unit 3 is configured to process the signal received by the sensor 5 so as to detect the presence of the driver on the seat 21 and to allow, through the electronic command and control unit 3, the activation of the motorized wheels 11 by the steering unit 15.

The command and control unit 3 which acts on the driver by the interface 12 can advantageously be actuated when the driver on the seat 21 moves the supports 6 of the stabilization assembly from the lowered position to the raised position, or automatically deactivate in the raised position of the supports, in case the driver falls from the seat 21.

The load sensor 5 is connected by interface means 7 to the electronic command and control unit 3, which interface means 7 are of the electrical and/or optical and/or magnetic and/or electromagnetic and/or mechanical and/or pneumatic and/or fluid dynamic type. These types can be provided as an alternative or at least a partial combination between them.

The sensor 5 in a first embodiment variant is configured to detect the presence of the driver on the seat 21, which driver must weigh not less than an adjustable threshold.

In a second embodiment variant, the command and control unit 3 is configured to process the signal received by the sensor 5 so as to measure the driver's weight on the seat 21. In this case, means are provided for comparing the weight value measured by the sensor 5 with predetermined safety weight thresholds, so that the actuation of the motorized wheels 11 by the electronic command and control unit 3 and the interface 12 is allowed only if the measured weight value is comprised between the limits indicated by said safety thresholds.

This allows the electronic command and control unit 3 to ascertain the presence of the driver and, in the most sophisticated models, to ascertain that the load due to the driver is included in the safety (minimum and maximum) limits of the device.

In a further embodiment variant, the command and control unit 3 is configured to process the signal received by the sensor 5 so as to detect, besides weight, the vertical accelerations to which the driver sitting on the seat 21 is subject. Means are provided for comparing the acceleration values measured by the sensor 5 with a predetermined safety acceleration threshold, so that the electronic command and control unit 3 automatically reduces the speed of the motorized wheels 11 if the measured acceleration value is above said safety acceleration threshold, then restores it when the need has ceased. This threshold can be customized according to the features of the driver.

The device described in relation to Figure 1 can be manufactured from scratch or it can be the result of the application of a transformation group to a self-balancing personal transport device of the "Segway" type or the like for its driving in a seated position.

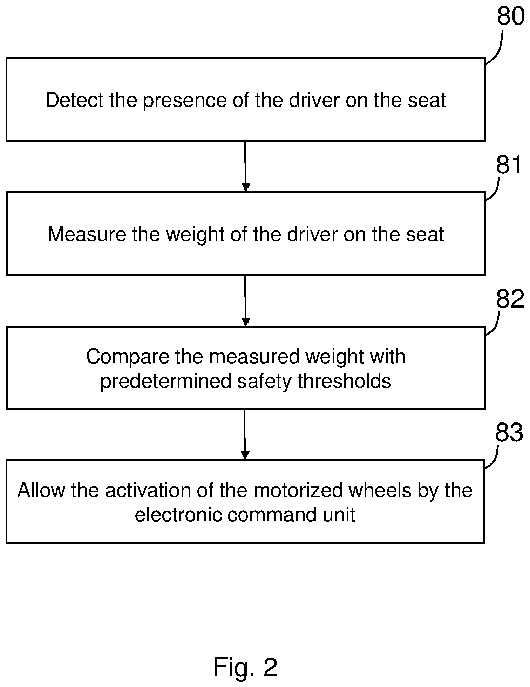

Figure 2 illustrates the method for activating and/or deactivating a self-balancing personal transport device as described above. The method includes the following steps:
- detecting the presence of the driver on the seat (80);
- measuring the weight of the driver on the seat (81);
- comparing the measured weight with predetermined safety thresholds (82);
- allowing the activation of the motorized wheels only if the measured weight value is comprised between the limits indicated by said safety thresholds (83).

Weight measurement can be done advantageously with the load sensor 5.

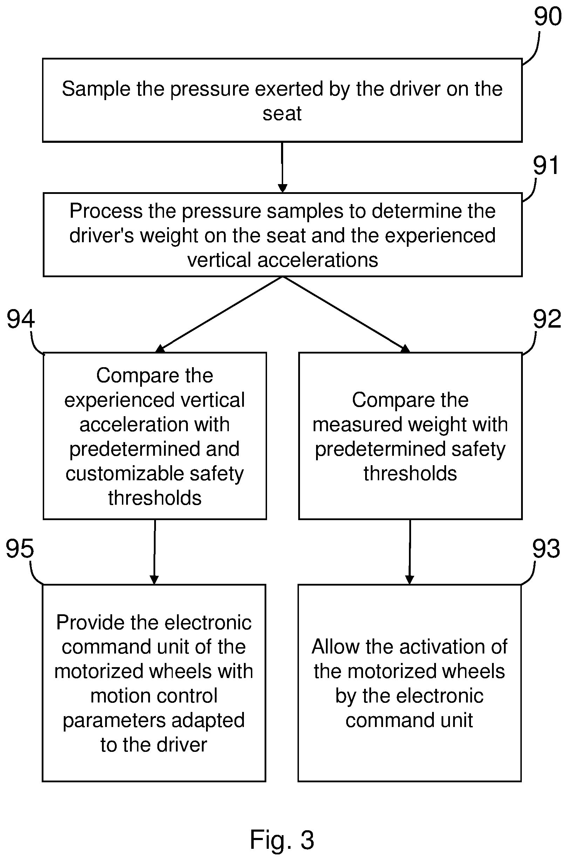

Figure 3 illustrates the activation, deactivation and speed control method of a personal transport device as described above in the presence of a load sensor capable of measuring the variation over time of the pressure exerted by the driver on the seat. The method includes the following steps:
- sampling the pressure exerted by the driver on the seat (90);
- processing the pressure samples to determine the driver's weight on the seat and the experienced vertical accelerations (91);
- comparing the measured weight with predetermined safety thresholds (92);
- allowing the activation of the motorized wheels by the electronic command and control unit only if the measured weight value is comprised between the limits indicated by said safety thresholds (93);
- comparing the experienced vertical acceleration with predetermined and customizable safety thresholds (94);
- providing the electronic command unit of the motorized wheels with motion control parameters adapted to the driver (95).

The measurement of weight and experienced accelerations can be done advantageously with the load sensor 5. The analysis of the signal coming from the load sensor 5, if analogical, that is, independently of the used technology, variable according to the pressure exerted on the seat by the driver, therefore produces two types of output. A first output is a mediated value (for example obtained by means of integration or digital filter) corresponding to the driver's weight free from accelerations (in particular the vertical ones) due to motion, to be compared with the load thresholds described above in order to enable or disable the traction. A second output is a dynamic datum that expresses the vertical stresses experienced by the driver, by which the speed of the vehicle may be controlled by means of a feedback mechanism, made possible by the interface with the drive, the speed of the vehicle and consequently mitigate these stresses, by comparison with a table, also customized, of sustainable stresses to then restore the speed when the need has ceased.

## Claims

1. Personal transport device of the balance-oriented type, comprising a base (10) interposed between electrically motorized wheels (11) commanded by a steering unit (15) and a support frame (20) integrally constrained to said base (10) and provided with a seat (21), and comprising at least one load sensor (5) configured to detect the pressure exerted by the driver on the seat (21),
it comprises an electronic command and control unit (3) adapted to command the steering unit (15) on the basis of the signals received by the sensor (5), the command and control unit (3) being connected to the sensor (5) by means of first interface means (7) of the electrical and/or optical and/or magnetic and/or electromagnetic and/or mechanical and/or pneumatic and/or fluid dynamic type, and the command and control unit (3) being connected to the steering unit (15) by means of second interface means (12) of the electrical and/or optical and/or magnetic and/or electromagnetic type, **characterized in that** the command and control unit (3) is configured to process the signal received by the sensor (5) so as to detect the vertical accelerations of the seat (21) and means are provided for comparing the acceleration values measured with a predetermined safety acceleration threshold, so that the electronic command and control unit (3) commands the steering unit (15) to automatically reduce the speed of the motorized wheels (11) if the measured acceleration value is higher than said safety acceleration threshold, to then restore it when the need has ceased.

2. Device according to claim 1, wherein at least one said sensor (5) is positioned within or under the seat (21).

3. Device according to claim 1 or 2, wherein the command and control unit (3) is configured to process the signal received by the sensor (5) so as to detect the presence of the driver on the seat (21).

4. Device according to claim 1 or 2, wherein the command and control unit (3) is configured to process the signal received by the sensor (5) so as to measure the driver's weight on the seat (21).

5. Device according to one or more of the preceding claims, wherein means are provided for comparing the measured weight value with predetermined safety weight thresholds, so that the electronic command and control unit (3) activates the steering unit (15) only if the measured weight value is included between the limits indicated by said safety weight thresholds.

6. Transformation assembly applicable to a self-balancing personal transport device for its driving in a seated position, which device comprises a base (10) interposed between electrically motorized wheels (11) and a steering unit (15) adapted to command the motorized wheels (11) in response to balance variations of the driver relative to the base (10), it comprises a support frame (20) which can be integrally constrained to said base (10) and provided with a seat (21) and at least one load sensor (5) configured to detect the pressure exerted by the driver on the seat (21) and an electronic command and control unit (3) adapted to command the steering unit (15) on the basis of the signals received by the sensor (5), the command and control unit (3) being connected to the sensor (5) by means of first interface means (7) of the electrical and/or optical and/or magnetic and/or electromagnetic and/or mechanical and/or pneumatic and/or fluid dynamic type, **characterized in that** the command and control unit (3) being connected to the steering unit (15) by means of second interface means (12) of the electrical and/or optical and/or magnetic and/or electromagnetic type, wherein the command and control unit (3) is configured to process the signal received by the sensor (5) so as to detect the vertical accelerations of the seat (21) and means are provided for comparing the acceleration values measured with a predetermined safety acceleration threshold, so that the electronic command and control unit (3) commands the steering unit (15) to automatically reduce the speed of the motorized wheels (11) if the measured acceleration value is higher than said safety acceleration threshold, to then restore it when the need has ceased.

7. Transformation assembly according to claim 6, which has the features according to one or more of claims 2 to 5.

## Patentansprüche

1. Personentransportvorrichtung vom balancierten Art, umfassend eine Basis (10), die zwischen elektrisch angetriebenen Rädern (11), die von einer Lenkeinheit (15) gesteuert werden, und einem Stützrahmen (20) angeordnet ist, der integral mit der Basis (10) verbunden ist und mit einem Sitz (21) versehen ist, und mindestens einen Lastsensor (5), der so konfiguriert ist, dass er den vom Fahrer auf den Sitz (21) ausgeübten Druck erfasst,
eine elektronische Steuer- und Regeleinheit (3), die so ausgelegt ist, dass sie die Steuerungseinheit (15) auf der Grundlage der vom Sensor (5) empfangenen Signale steuert, wobei die Steuer- und Regeleinheit (3) über erste Schnittstellenmittel (7) vom elektrischen und/oder optischen und/oder magnetischen und/oder elektromagnetischen und/oder mechanischen und/oder pneumatischen und/oder fluidodynamischen Art mit dem Sensor (5) verbunden ist, und die Steuer- und Regeleinheit (3) über zweite Schnittstellenmittel (12) vom elektrischen und/oder optischen und/oder magnetischen und/oder elektromagnetischen Typ mit der Steuerungseinheit (15) verbunden ist, **dadurch gekennzeichnet, dass**
die Steuer- und Regeleinheit (3) so konfiguriert ist, dass sie das vom Sensor (5) empfangen wird, um die vertikalen Beschleunigungen des Sitzes (21) zu erfassen, und dass Mittel vorgesehen sind, um die gemessenen Beschleunigungswerte mit einem vorbestimmten Sicherheitsbeschleunigungsschwellenwert zu vergleichen, so dass die elektronische Steuer- und Regeleinheit (3) die Steuerungseinheit (15) anweist, die Geschwindigkeit der motorisierten Räder (11) automatisch zu verringern, wenn der gemessene Beschleunigungswert höher als der Sicherheitsbeschleunigungsschwellenwert ist, um sie dann wiederherzustellen, wenn die Notwendigkeit nicht mehr besteht.

2. Vorrichtung nach Anspruch 1, wobei mindestens einer der Sensoren (5) innerhalb oder unter dem Sitz (21) positioniert ist.

3. Vorrichtung nach Anspruch 1 oder 2, wobei die Steuer- und Regeleinheit (3) so konfiguriert ist, dass sie das vom Sensor (5) empfangene Signal verarbeitet, um die Anwesenheit des Fahrers auf dem Sitz (21) zu erfassen.

4. Vorrichtung nach Anspruch 1 oder 2, wobei die Steuer- und Regeleinheit (3) so konfiguriert ist, dass sie das vom Sensor (5) empfangene Signal verarbeitet, um das Gewicht des Fahrers auf dem Sitz (21) zu messen.

5. Vorrichtung nach einem oder mehreren der vorstehenden Ansprüche, wobei Mittel zum Vergleichen des gemessenen Gewichtswerts mit vorgegebenen Sicherheitsgewichtsschwellen vorgesehen sind, so dass die elektronische Befehls- und Steuereinheit (3) die Lenkeinheit (15) nur dann aktiviert, wenn der gemessene Gewichtswert zwischen den durch die Sicherheitsgewichtsschwellen angegebenen Grenzen liegt.

6. Transformationsbaugruppe, die an einem selbstausgleichenden Personentransportgerät für dessen Antrieb in sitzender Position anwendbar ist, wobei das Gerät eine Basis (10) umfasst, die zwischen elektrisch angetriebenen Rädern (11) und einer Steuereinheit (15) angeordnet ist, die dazu ausgelegt ist, die angetriebenen Räder (11) in Reaktion auf Gleichgewichtsänderungen des Fahrers relativ zur Basis (10) zu steuern,
sie umfasst einen Stützrahmen (20), der integral mit der Basis (10) verbunden werden kann und mit einem Sitz (21) und mindestens einem Lastsensor (5) versehen ist, der so konfiguriert ist, dass er den vom Fahrer auf den Sitz (21) ausgeübten Druck erfasst, sowie eine elektronische Steuer- und Regeleinheit (3), die dazu ausgelegt ist, die Lenkeinheit (15) auf der Grundlage der vom Sensor (5) empfangenen Signale zu steuern, wobei die Steuer- und Regeleinheit (3) über erste Schnittstellenmittel (7) vom elektrischen und/oder optischen und/oder magnetischen und/oder elektromagnetischen und/oder mechanischen und/oder pneumatischen und/oder fluidodynamischen Art mit dem Sensor (5) verbunden ist, **dadurch gekennzeichnet, dass**
die Steuer- und Regeleinheit (3) über zweite Schnittstellenmittel (12) elektrischer und/oder optischer und/oder magnetischer und/oder elektromagnetischer Art mit der Lenkeinheit (15) verbunden ist, wobei die Steuer- und Regeleinheit (3) so konfiguriert ist, dass sie das vom Sensor (5) empfangen wurde, um die vertikalen Beschleunigungen des Sitzes (21) zu erfassen, und dass Mittel vorgesehen sind, um die gemessenen Beschleunigungswerte mit einem vorbestimmten Sicherheitsbeschleunigungsschwellenwert zu vergleichen, so dass die elektronische Steuer- und Regeleinheit (3) die Lenkeinheit (15) anweist, die Geschwindigkeit der motorisierten Räder (11) automatisch zu verringern, wenn der gemessene Beschleunigungswert höher als der Sicherheitsbeschleunigungsschwellenwert ist, um sie dann wiederherzustellen, wenn die Notwendigkeit dafür nicht mehr besteht.

7. Transformationsbaugruppe nach Anspruch 6, die die Merkmale nach einem oder mehreren der Ansprüche 2 bis 5 aufweist.

## Revendications

1. Dispositif de transport individuel du type à équilibrage, comprenant une base (10) interposée entre des roues à moteur électrique (11) commandées par une unité de guidage (15) et un châssis de support (20) solidaire de ladite base (10) et muni d'un siège (21), et comprenant au moins un capteur de charge (5) configuré pour détecter la pression exercée par le conducteur sur le siège (21),
il comprend une unité de commande et de contrôle électronique (3) adaptée pour commander l'unité de guidage (15) sur la base des signaux reçus par le capteur (5), l'unité de commande et de contrôle (3) étant connectée au capteur (5) au moyen d'un premier moyen d'interface (7) de type électrique et/ou optique et/ou magnétique et/ou électromagnétique et/ou mécanique et/ou pneumatique et/ou fluidodynamique, et l'unité de commande et de contrôle (3) étant connectée à l'unité de guidage (15) au moyen de seconds moyens d'interface (12) de type électrique et/ou optique et/ou magnétique et/ou électromagnétique, **caractérisé en ce que**
l'unité de commande et de contrôle (3) est configurée pour traiter le signal reçu par le capteur (5) de manière à détecter les accélérations verticales du siège (21) et des moyens sont prévus pour comparer les valeurs d'accélération mesurées à un seuil d'accélération de sécurité prédéterminé, de sorte que l'unité de commande et de contrôle électronique (3) commande à l'unité de guidage (15) de réduire automatiquement la vitesse des roues motorisées (11) si la valeur d'accélération mesurée est supérieure audit seuil d'accélération de sécurité, pour ensuite la rétablir lorsque le besoin a cessé.

2. Dispositif selon la revendication 1, dans lequel au moins un desdits capteurs (5) est positionné à l'intérieur ou sous le siège (21).

3. Dispositif selon la revendication 1 ou 2, dans lequel l'unité de commande et de contrôle (3) est configurée pour traiter le signal reçu par le capteur (5) de manière à détecter la présence du conducteur sur le siège (21).

4. Dispositif selon la revendication 1 ou 2, dans lequel l'unité de commande et de contrôle (3) est configurée pour traiter le signal reçu par le capteur (5) de manière à mesurer le poids du conducteur sur le siège (21).

5. Dispositif selon une ou plusieurs des revendications précédentes, dans lequel des moyens sont prévus pour comparer la valeur de poids mesurée à des seuils de poids de sécurité prédéterminés, de sorte que l'unité de commande et de contrôle électronique (3) n'active l'unité de guidage (15) que si la valeur de poids mesurée est comprise entre les limites indiquées par lesdits seuils de poids de sécurité.

6. Ensemble de transformation applicable à un dispositif de transport personnel auto-équilibré pour sa conduite en position assise, lequel dispositif comprend une base (10) interposée entre des roues à moteur électrique (11) et une unité de guidage (15) adaptée pour commander les roues à moteur (11) en réponse à des variations d'équilibre du conducteur par rapport à la base (10),
il comprend un châssis de support (20) qui peut être contraint de manière intégrale à ladite base (10) et muni d'un siège (21) et d'au moins un capteur de charge (5) configuré pour détecter la pression exercée par le conducteur sur le siège (21) et une unité de commande et de contrôle électronique (3) adaptée pour commander l'unité de guidage (15) sur la base des signaux reçus par le capteur (5), l'unité de commande et de contrôle (3) étant connectée au capteur (5) au moyen d'un premier moyen d'interface (7) de type électrique et/ou optique et/ou magnétique et/ou électromagnétique et/ou mécanique et/ou pneumatique et/ou fluidodynamique, **caractérisé en ce que**
l'unité de commande et de contrôle (3) est connectée à l'unité de guidage (15) à l'aide d'un deuxième moyen d'interface (12) de type électrique et/ou optique et/ou magnétique et/ou électromagnétique, dans lequel l'unité de commande et de contrôle (3) est configurée pour traiter le signal reçu par le capteur (5) de manière à détecter les accélérations verticales du siège (21) et des moyens sont prévus pour comparer les valeurs d'accélération mesurées à un seuil d'accélération de sécurité prédéterminé, de sorte que l'unité de commande et de contrôle électronique (3) commande à l'unité de guidage (15) de réduire automatiquement la vitesse des roues motorisées (11) si la valeur d'accélération mesurée est supérieure audit seuil d'accélération de sécurité, pour ensuite la rétablir lorsque le besoin a cessé.

7. Ensemble de transformation selon la revendication 6, qui présente les caractéristiques selon une ou plusieurs des revendications 2 à 5.
